# EUROPÄISCHE PATENTSCHRIFT

(11) **EP 0 656 736 B1**
(45) Veröffentlichungstag und Bekanntmachung des Hinweises auf die Patenterteilung: **19.09.2001**
(21) Anmeldenummer: 94116448.5
(22) Anmeldetag: 19.10.1994
(51) Int. Cl.: H04Q 7/38

(54) **Verfahren und Vorrichtung zur Bestimmung der Zuordnung der Gerätenummer eines Mobilfunkendgerätes zu Gerätelisten**
Method and apparatus for determining the allocation of a mobile station equipment identity number to equipment identity registers
Méthode et appareil pour déterminer l'allocation du numéro de série d'une station radio mobile à des listes

(30) Priorität: 29.10.1993 DE 4336995
(43) Veröffentlichungstag der Anmeldung: 07.06.1995
(73) Patentinhaber: ALCATEL, 75008 Paris (FR)
(72) Erfinder: Pfundstein, Matthias, Dr., D-70195 Stuttgart (DE)
(74) Vertreter: Rausch, Gabriele, Dr.

(56) Entgegenhaltungen:
- EP-A- 0 464 425
- FITCE JOURNAL, Nr.4, Oktober 1991, BELGIUM Seiten 33 - 36 LOIX 'The Equipment Identity Register (EIR)'
- ELECTRICAL COMMUNICATION, Nr.2, April 1993, PARIS FR Seiten 141 - 154, XP000368133 FELDMANN ET AL. 'GSM Network Systems and Overall System Integration'

## Beschreibung

Die Erfindung betrifft ein Verfahren zur Bestimmung der Zuordnung eines Mobilfunkendgerätes zu Geräte-Listen nach dem Oberbegriff von Anspruch 1 sowie einer Vorrichtung zur Bestimmung der Zuordnung eines Mobilfunkendgerätes zu Geräte-Listen nach dem Oberbegriff von Anspruch 8.

Ein solches Verfahren ist z.B. in Mobilfunk-Systemen nach dem GSM-Standart (GSM = Global System for Mobile Communication) vorgesehen.

Dort trägt jedes Mobilfunkendgerät eine ihm eindeutig zugeordnete Gerätenummer, die IMEI (oder auch Mobile Equipment Identity Number) genannt wird. Diese Gerätenummer kann von der zuständigen Funkvermittlungsstelle (MSC = Mobile Switching Centre) angefordert werden.

Die Funkvermittlungsstellen ihrerseits besitzen eine Endgeräte-Kennungs-Datei (EIR; EIR = Equipment Identity Register). In dieser Datei sind z.B. Mobilfunkendgeräte vermerkt, die als gestohlen gemeldet sind.

Die Funkvermittlungsstelle fordert nun z.B. jedesmal, bevor sie eine Verbindung für einen Mobilfunkteilnehmer aufbaut, die Gerätenummer seines Mobilfunkendgerätes an. Anschließend überprüft sie mittels der Endgeräte-Kennungs-Datei, ob das Mobilfunkendgerät als gestohlen gemeldet ist oder nicht. Ist es gestohlen, so verweigert sie den weiteren Verbindungsaufbau.

In dem Kapitel 'Mobile Equipment Management' aus dem Buch 'The GSM System for Mobile Communications', Seiten 585-91, das von den Autoren M. Mouly und M.B. Pautet selbst herausgegeben wurde und die ISBN-Nummer 2-95 07 190-0-7 trägt, wird nun der Aufbau einer solchen Endgeräte-Kennungs-Datei erläutert.

In der Endgeräte-Kennungs-Datei sind drei Listen abgespeichert, die als white list, grey list und black list bezeichnet werden.

In der white list sind Bereiche von Gerätenummern abgespeichert, die funktionstüchtig und nicht gestohlen sind. In der black-list sind Gerätenummern von Mobilfunkendgeräten abgespeichert, die als gestohlen gemeldet oder nicht funktionstüchtig sind. In der grey list sind Mobilfunkendgeräte abgespeichert, deren Status noch nicht vollkommen bestimmt ist, also z.B. bevor die Zuteilung zur black-list endgültig bestätigt wird.

Wie diese Listen in der Endgeräte-Kennungs-Datei abgelegt sind und wie diese Listen nach einer bestimmten Gerätenummer durchsucht werden, ist hier nicht weiter ausgeführt.

Im allgemeinen bieten sich hier zwei Möglichkeiten an:

Zum einen können die Geräte-Listen nacheinander nach einer bestimmten Gerätenummer durchsucht werden.

Zum anderen kann eine gemeinsame Liste erstellt werden, in der alle Gerätenummern mit der Geräte-Liste, der sie zugeordnet sind, vermerkt sind. Eine solche Liste kann nach einem bestimmten Kriterium sortiert sein, wodurch sich die Suche nach einer bestimmten Gerätenummer beschleunigt.

Insgesamt ergibt sich hier das Problem, daß jedes Mobilfunkendgerät mit einer Gerätenummer ausgestattet ist und somit die Gesamtzahl der Gerätenummern sehr groß ist. Damit ergeben sich für beide oben beschriebenen Lösungsmöglichkeiten große Datensätze, die viel Speicherplatz benötigen und in denen die Suche nach einer Gerätenummer recht lange dauert.

Der Erfindung liegt nun die Aufgabe zugrunde, zu ermitteln, welcher Geräte-Liste ein Mobilfunkendgerät zugeordnet ist.

Diese Aufgabe wird gelöst durch ein Verfahren nach der Lehre des Anspruchs 1 sowie durch eine Vorrichtung nach der Lehre des Anspruchs 8.

Die Erfindung berücksichtigt die Erkenntnis, daß die Zuteilung von Gerätenummern zu Geräte-Listen nicht vollkommen zufällig ist. So gehören z.B. benachbarte Gerätenummern häufig der selben Geräte-Liste, vorzugsweise der white-list, an. Die Gerätenummern der black-list stehen meist einzeln. Damit besteht die Forderung, bei der Zuordnung von Gerätenummern zu Geräte-Listen diese unterschiedliche Charakteristik der Zuordnung zu beachten.

Der Grundgedanke der Erfindung ist es nun, die Zuordnung der Gerätenummern zu den Geräte-Listen mittels Strukturelementen zu beschreiben und auf die Strukturelemente über Suchschlüssel zuzugreifen. Ein Strukturelement ist dabei eine Datenstruktur, die eine Gerätenummer oder einen ganzen Bereich von Gerätenummern einer Geräte-Liste zuordnet. Ein Suchschlüssel adressiert hier mehrere dieser Strukturelemente. Dies hat auch den Vorteil, daß die Darstellung von Gerätenummern in den Strukturelementen in verkürzter Form geschehen kann, da der Suchschlüssel bereits einen Teil der Adressierung einer Gerätenummer darstellt.

Die Erfindung bietet so den Vorteil, durch die Verwendung von Strukturelementen und Suchschlüsseln die Größe des Datensatzes zu reduzieren, der für die Darstellung der Zuordnung der Gerätenummern zu den Geräte-Listen benötigt wird. Durch die Verwendung von Suchschlüsseln wird darüberhinaus die Suche nach einer bestimmten Gerätenummer beschleunigt, da der zu durchsuchende Nummernbereich stark reduziert wird.

Im folgenden wird die Erfindung anhand zweier Ausführungsbeispiele unter Zuhilfenahme der beiliegenden Zeichnungen weiter erläutert.

Fig. 1 zeigt eine schematische Darstellung einer Datenstruktur für ein erstes Ausführungsbeispiel.

Fig. 2 zeigt eine symbolische Darstellung des Aufbaus einer Gerätenummer nach dem GSM-Standard und eines Suchschlüssels für die Datenstruktur nach Fig. 1.

Fig. 3 zeigt eine symbolische Darstellung mehrerer Strukturen für ein erstes Ausführungsbeispiel.

Fig. 4 zeigt eine symbolische Darstellung einer erfindungsmäßigen Vorrichtung zur Bestimmung der Zuordnung eines Mobilfunkendgerätes zu Geräte-Listen für ein zweites Ausführungsbeispiel.

In einem ersten Beispiel wird die Anwendung des erfindungsgemäßen Verfahrens in einem GSM-Mobilfunksystem beschrieben, in dem Mobilfunkendgeräte drei verschiedenen Geräte-Listen zugeordnet sind.

Es ist auch möglich, das erfindungsgemäße Verfahren auf andere Mobilfunksysteme oder eine andere Anzahl von Geräte-Listen anzuwenden.

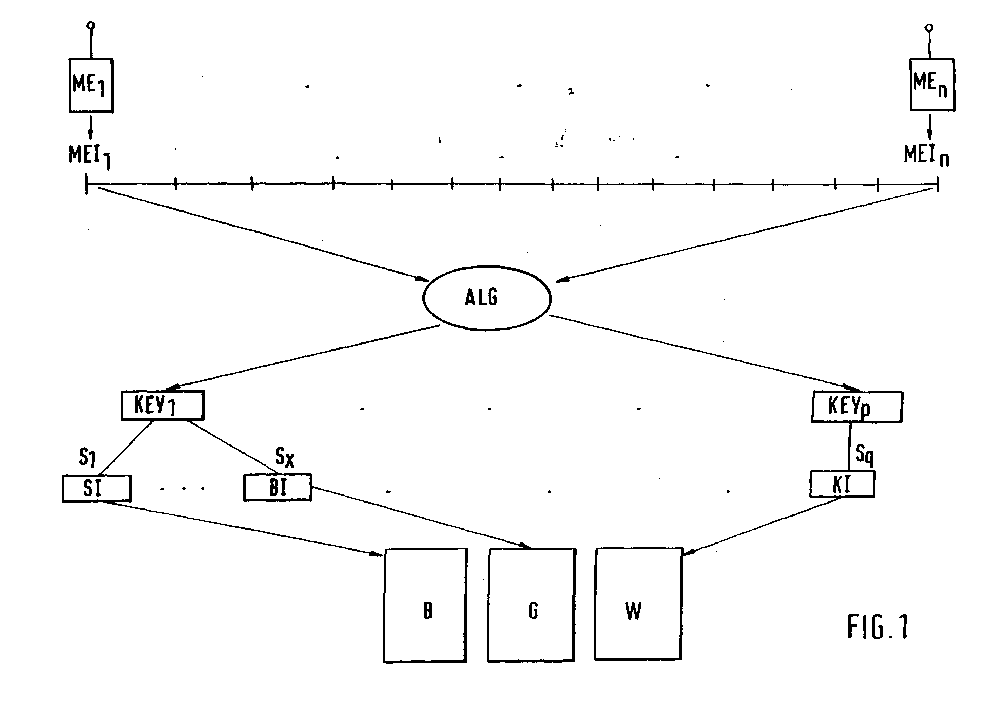

Fig. 1 zeigt mehrere Mobilfunkendgeräte ME₁ bis MEₙ, mehrere Gerätenummern MEI₁ bis MEIₙ, mehrere Suchschlüssel KEY₁ bis KEYₚ mehrere Strukturelemente S₁ bis S_{q} und drei Geräte-Listen W, G und B.

Jedem der Mobilfunkendgeräte ME₁ bis MEₙ ist eine der Gerätenummern MEI₁ bis MEIₙ eindeutig zugeordnet. Dies wird z.B. dadurch erreicht, daß bei der Produktion an die Mobilfunkendgeräte ME₁ bis MEₙ fortlaufende Nummern vergeben werden, und die zugeteilte Nummer in einem in den Mobilfunkgeräten ME₁ bis MEₙ integrierten Festwertspeicher vermerkt wird.

Die Suchschlüssel KEY₁ bis KEYₚ dienen dazu, jeweils einen Teil der Gerätenummern MEI₁ bis MEIₙ einem Datensatz zuzuordnen. Jeder der Suchschlüssel KEY₁ bis KEYₚ adressiert somit einen Datensatz.

Die Strukturelemente S₁ bis S_{q} ordnen jeweils eine der Gerätenummern MEI₁ bis MEIₙ oder eine Untermenge von mehreren der Gerätenummern MEI₁ bis MEIₙ einer der Geräte-Listen W, G und B zu. Es gibt drei unterschiedliche Sorten von Strukturelementen. Sie unterscheiden sich jeweils in der Art, wie sie Gerätenummern einer der Geräte-Listen W, G und B zuordnen. Eine Sorte SI ordnet dabei eine Gerätenummer einer der Geräte-Listen W, G und B zu. Eine Sorte BI ordnet einen ganzen Bereich aufeinander folgender Gerätenummern und eine Sorte KI sämtliche durch einen Suchschlüssel adressierten Gerätenummern einer der Geräte-Listen W, G und B zu.

Es ist auch möglich, andere oder eine andere Anzahl von Sorten von Strukturelementen zu verwenden.

Die Gerätenummern MEI₁ bis MEIₙ werden von einem Algorithmus ALG auf die Suchschlüssel KEY₁ bis KEYₚ abgebildet. Hierbei korrespondieren jeweils mehrere der Gerätenummern MEI₁ bis MEIₙ mit einem der Suchschlüssel KEY₁ bis KEYₚ. Jeder der Gerätenummern MEI₁ bis MEIₙ wird dabei nur auf einen der Suchschlüssel KEY₁ bis KEYₚ abgebildet.

Mittels eines Suchschlüssels ist es wiederum möglich, auf einen Datensatz zuzugreifen, der aus einem Strukturelement oder mehreren Strukturelementen besteht. Dabei ist es möglich, daß der Datensatz auch mehrere unterschiedliche Sorten von Strukturelementen enthält. In den Strukturelementen ist sodann die Zuordnung zu den Geräte-Listen W, G und B gegeben.

Das Strukturelement S_{X}, das von dem Suchschlüssel KEY₁ adressiert wird und der Sorte BI angehört, ordnet so einen ganzen Bereich von Gerätenummern der Geräte-Liste G zu. Gleichzeitig ordnet das Strukturelement S1, das ebenfalls von dem Suchschlüssel KEY₁ adressiert wird, eine einzelne Gerätenummer der Geräte-Liste B zu. Das Strukturelement S1 gehört dabei der Sorte SI an. Der Suchschlüssel KEY₁ adressiert daneben noch mehrere andere Strukturelemente. Der Suchschlüssel KEYₚ adressiert nur ein einziges Strukturelement, das Strukturelement S_{q}. Das Strukturelement S_{q} gehört der Sorte KI an und ordnet sämtliche Gerätenummern, die auf den Suchschlüssel KEYₚ abgebildet werden, der Geräte-Liste W zu.

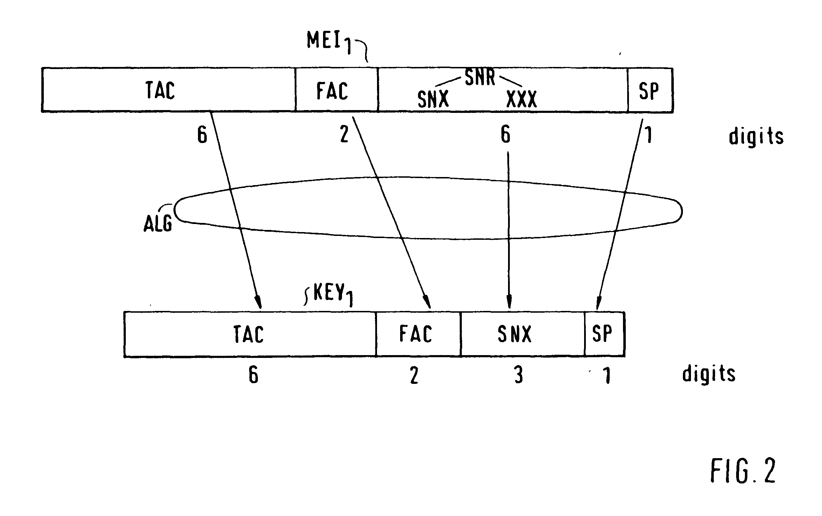

Anhand von Fig. 2 wird nun beispielhaft die Abbildung einer Gerätenummer auf einen Suchschlüssel durch den Algorithmus ALG näher erläutert.

Fig. 2 zeigt die Gerätenummer MEI₁ und den Suchschlüssel KEY₁.

Die Gerätenummer MEI₁ weist vier Kennungen TAC, FAC und SP und eine Seriennummer SNR auf. Die Kennung TAC ist sechsstellig und steht für das Land, in der das Mobilfunkendgerät produziert wurde, die Kennung FAC ist zweistellig und steht für den Hersteller des Mobilfunkendgeräts. Die Seriennummer SNR ist eine herstellerspezifische, sechsstellige Zahl. Die Kennung SP ist einstellig und ihr ist noch keine Bedeutung zugewiesen worden.

Somit besteht die Gerätenummer MEI₁ aus einer 15-stelligen, dezimalen Zahl, die in einem 8 Byte langen Wert dargestellt wird.

Der Suchschlüssel KEY₁ weist vier Kennungen TAC, FAC und SP und SNX auf. Die Kennung SNX ist dreistellig und wird vom Algorithmus ALG aus der Seriennummer SNR erzeugt. Damit besteht der Suchschlüssel KEY₁ aus einer 12 stelligen Zahl und wird so in einem 5 Byte langen Wert dargestellt.

Der Algorithmus ALG erzeugt den Suchschlüssel KEY₁, indem er die Kennungen TAC, FAC und SP aus der Gerätenummer MEI₁ überträgt und die Seriennummer SNR in die Kennung SNX umwandelt. Hierfür streicht er die letzten drei Ziffern der Kennung SNR weg und verkürzt sie damit auf drei Stellen.

Es wird so immer ein Block von tausend Gerätenummern auf einen Suchschlüssel abgebildet.

Es ist auch möglich, daß die Gerätenummer MEI₁ oder der Suchschlüssel KEY₁ eine andere Zusammensetzung oder Länge besitzt. So besitzt z.B. eine Gerätenummer nach dem amerikanischen Mobilfunk-Standart nur 11 Ziffern und kann nach dem selben Prinzip bearbeitet werden.

Auch ein anderer Algorithmus ALG zur Umwandlung der Gerätenummer MEI₁ in den Suchschlüssel KEY₁ ist denkbar. So könnte z.B. die Kennung SP mit einbezogen werden.

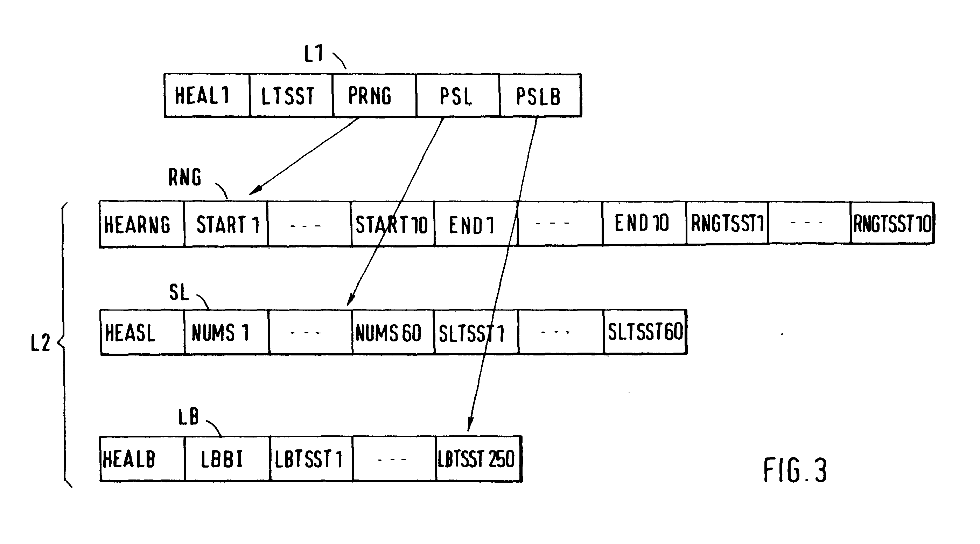

Die Datenstruktur, mit deren Hilfe der Suchschlüssel KEY₁ auf die einzelnen Strukturelemente zugreift, wird beispielhaft anhand von Fig. 3 erläutert. Es handelt sich dabei um eine Datenstruktur variabler Länge, deren Länge sich an der Anzahl der mit dem Suchschlüssel KEY₁ korrespondierenden Strukturelemente bemißt.

Fig. 3 zeigt vier Strukturen L1, RNG, SL und LB. Die Struktur L1 ist immer Bestandteil des Datensatzes. Die anderen drei Strukturen RNG, SL und LB gehören zu einer Strukturgruppe L2 und können bei Bedarf mit der Struktur L1 verkettet werden.

Die Struktur L1 enthält einen Strukturkopf HEAL1, drei Zeiger PRNG PSL und PSLB und ein Statuselement LTSST. Der Strukturkopf HEAL1 enthält u.a. den zugehörigen Suchschlüssel KEY₁ als Datensatzschlüssel.

Die Zeiger PRNG, PSL und PSLB dienen zur eventuellen weiteren Verknüpfung mit den Strukturen RNG, SL bzw. LB der Strukturgruppe L2.

Das Statuselement LTSST beinhaltet zweierlei Informationen. Zum einen ordnet es entweder sämtliche Gerätenummern des Suchschlüssels KEY1 der Geräte-Liste W zu oder es verweist auf die Verknüpfung mit weiteren Strukturen aus der Strukturgruppe L2. Zum anderen trägt es einen Zeitstempel.

Im Fall, daß sämtliche Gerätenummern des Suchschlüssels KEY₁ der Geräte-Liste W zugeordnet sind, ist dort der Zeitpunkt eingetragen, wann diese Zuordnung erfolgt ist oder zum letzten Mal bestätigt wurde. In diesem Fall stellt das Statuselement LTSST ein Strukturelement der Sorte KI in der Struktur L1 dar, das sämtliche Gerätenummern, die auf den Suchschlüssel KEY₁ abgebildet werden, der Geräte-Liste W zuordnet.

Die Struktur RNG enthält einen Strukturkopf HEARNG, zehn Startelemente START 1 bis START 10, zehn Endelemente END 1 bis END 10 und zehn Statuselemente RNGTSST 1 bis RNGTSST 10.

Der Strukturkopf HEARNG dient u.a. zur Verknüpfung mit weiteren Strukturen, die wie die Struktur RNG aufgebaut sind.

Die Startelemente START 1 bis START 10 und die Endelemente END 1 bis END 10 enthalten jeweils eine dreistellige Ziffer. Diese entspricht den drei Endziffern der Seriennummer SNR, die vom Algorithmus ALG bei der Abbildung auf den Suchschlüssel KEY weggestrichen wurden.

Damit ergibt sich aus dieser dreistelligen Ziffer und dem Suchschlüssel KEY₁ durch die Verknüpfung mittels des Umkehralgorithmus zum Algorithmus ALG wieder die Gerätenummer MEI₁.

Die Statuselemente RNGTSST 1 bis RNGTSST 10 enthalten zweierlei Informationen. Zum einen enthalten sie eine Zuordnung zu den Geräte-Listen W, G und B und zum anderen einen Zeitstempel, der den Zeitpunkt angibt, wann die Zuordnung erfolgt ist oder zum Letztenmal bestätigt wurde.

Die Zuordnung ist dabei eindeutig, d.h., es ist jeweils nur eine der Listen W, G und B zugeordnet.

Das Startelement START 1, das Endelement END 1 und das Statuselement RNGTSST 1 bilden zusammen in der Struktur RNG ein Strukturelement der Sorte BI. Hierbei erfolgt die Zuordnung zu einer der Geräte-Listen B, G und W durch das Statuselement RNGTSST 1. Das Startelement START 1 und das Endelement END 1 geben den Bereich von Gerätenummern an, der zugeordnet wird. Bei diesem Bereich handelt es sich um einen Bereich von aufeinanderfolgenden Gerätenummern, wobei das Startelement START 1 und der Suchschlüssel KEY₁ den Anfang und das Endelement END 1 und der Suchschlüssel KEY₁ das Ende dieses Bereiches beschreiben.

Die restlichen Startelemente START 2 bis START 10, Endelemente END 2 bis END 3 und Statuselemente RNGTSST 2 bis RANGTSST 3 bilden in der Struktur RNG ebenso Strukturelemente der Sorte BI.

Hiermit wird durch die Struktur RNG ein Bündel von zehn Strukturelemente der Sorte BI zusammengefaßt. Werden weitere Strukturelemente der Sorte BI benötigt, so können weitere Strukturen, die wie Struktur RNG aufgebaut sind, mit der Struktur RNG verknüpft werden.

Die Struktur SL enthält einen Strukturkopf HEASL, sechzig Nummernelemente NUMS 1 bis NUMS 60 und sechzig Statuselemente SLTSST 1 bis SLTSST 60.

Der Strukturkopf HEASL dient u.a. zur Verknüpfung mit weiteren Strukturen, die wie die Struktur SL aufgebaut sind.

Die Nummernelemente NUMS 1 bis NUMS 60 enthalten jeweils eine dreistellige Ziffer, aus der ebenso wie bei den Startelementen START 1 bis START 20 oder den Endelementen END 1 bis END 20 eine Gerätenummer reproduziert werden kann.

Die Statuselemente SLTSST 1 bis SLTSST 60 sind genauso aufgebaut wie die Statuselemente RNGTSST 1 bis RNGTSST 10.

Das Nummernelement NUMS 1 und das Statuselement SLTSST 1 bilden zusammen in der Struktur SL ein Strukturelement der Sorte SI. Hierbei ordnet das Statuselement SLTSST 1 die Gerätenummer, die durch das Nummernelement NUMS 1 und den Suchschlüssel KEY₁ beschrieben wird, einer der drei Gerätelisten W, G oder B zu.

Die restlichen Nummernelemente NUMS 2 bis NUMS 60 und Statuselemente SLTSST 2 bis SLTSST 60 bilden ebenfalls paarweise Strukturelemente der Sorte SI. Somit wird durch die Struktur SL ein Bündel von 60 Strukturelemente der Sorte SI zusammengefaßt.

Die Struktur LB enthält einen Strukturkopf HEALB, einen Blockindex LBBI und 250 Statuselemente LBTSST 1 bis LBTSST 250.

Der Strukturkopf HEALB dient u.a. zur Verknüpfung mit weiteren Strukturen, die wie die Struktur LB aufgebaut sind.

Der Wertevorrat des Blockindex LBBI umfaßt die Zahlen Null bis Drei. Die Statuselemente LBTSST 1 bis LBTSST 250 sind genauso aufgebaut wie die Statuselemente RNGTSST 1 bis RNGTSST 10.

Die Gerätenummer, der eines der Statuselemente RNGTSST 1 bis RNGTSST 10 zugeordnet ist, wird durch den Suchschlüssel KEY₁, den Index (Strukturposition) des Statuselementes und den Blockindex LBBI wie folgt beschrieben. Der Blockindex LBBI wird mit 250 multipliziert und zu dieser Zahl der Index des Statuselementes addiert. Das Ergebnis steht für die Position der Gerätenummer innerhalb des durch den Suchschlüssel KEY₁ adressierten Gerätenummern-Blocks. Damit wird durch die Struktur LB ein Bündel von 250 Strukturelementen der Sorte SI zusammengefaßt. Mit vier Strukturen von der Art wie Struktur LB kann der gesamte durch den Suchschlüssel KEY₁ adressierte Block von tausend Gerätenummern beschrieben werden.

Es ist auch möglich, auf den Zeitstempel in den Zuordnungselementen LTSST, RNGTSST 1 bis RNGTSST 10, SLTSST 1 bis SLTSST 60 und LBTSST 1 bis LBTSST 250 zu verzichten. Dieser Zeitstempel dient nur dazu, die Aktualität der Zuordnungsinformation zu überprüfen.

Es ist auch denkbar, auf die Zusammenfassung von Strukturelementen in Strukturen zu verzichten. Sämtliche Strukturelemente könnten z.B. mittels Pointer mit der Struktur L1 verkettet werden. Die Anzahl der Strukturelemente, die in den Strukturen RNG, SL und LB zusammengefaßt werden, könnte ebenfalls anders gewählt werden.

Damit ergibt sich folgendes Vorgehen, wenn diejenige der Geräte-Listen W, G und B ermittelt werden soll, der die Gerätenummer MEI₁ zugeordnet ist:

Mit dem Algorithmus ALG wird die Gerätenummer MEI₁ auf den Suchschlüssel KEY₁ abgebildet. Dieser adressiert einen Datensatz, der sich aus der Struktur L1 und einer variablen Anzahl von Strukturen der Gruppe L2 zusammensetzt. Durch die sich so ergebende Datenstruktur kann mit dem Suchschlüssel KEY₁ auf eine variable Anzahl von unterschiedlichen Strukturelementen zugegriffen werden. Diese Strukturelemente werden solange nach der Gerätenummer MEI₁ durchsucht, bis diese gefunden ist.

Diese Vorgehensweise hat dabei folgenden Vorteil:

Durch die Beschreibung der Zuordnung von Gerätenummern zu den Geräte-Listen W, G und B mittels Strukturelementen, ergibt sich eine hohe Datenkompression. So kann z.B. ein zusammenhängender Teil von tausend Gerätenummern mittels eines einzigen Strukturelements der Sorte KI einer der Geräte-Listen W, G und B zugeordnet werden. Durch die Verwendung von Suchschlüsseln ist es darüberhinaus möglich, daß die einzelnen Strukturelemente nur noch eine dreistellige Ziffer anstatt einer zwölfstelligen benötigen, um eine Gerätenummer eindeutig darzustellen. Auch auf diese Weise ergibt sich ebenfalls eine erhebliche Datenkompression.

Die Verwendung von Suchschlüsseln hat darüberhinaus auch noch den Vorteil, daß die Anzahl der nötigen Suchschritte reduziert wird, da nur noch die Teilmenge des gesamten Datensatzes, die von einem Suchschlüssel adressiert wird, durchsucht werden muß.

In einem zweiten Beispiel wird eine erfindungsgemäße Vorrichtung beschrieben, die mit einem erfindungsgemäßen Verfahren arbeitet.

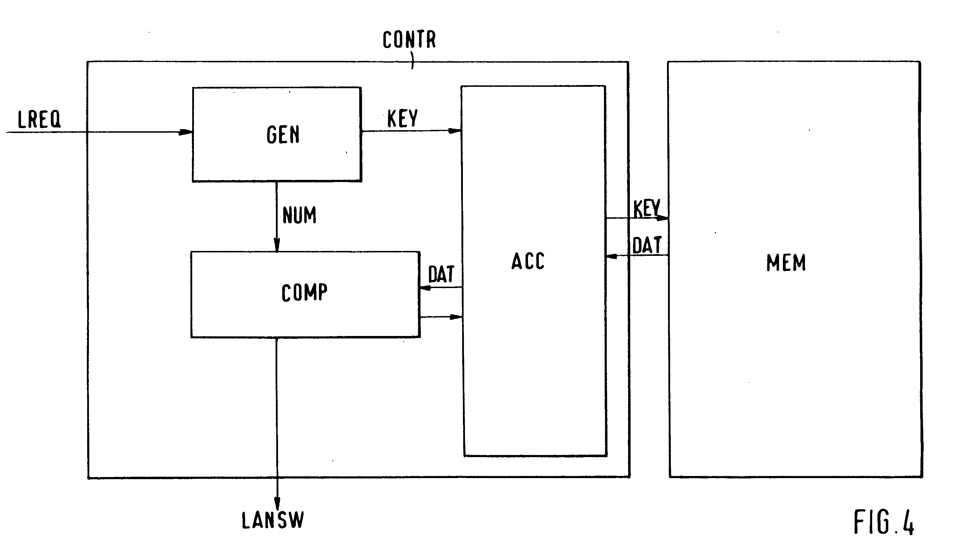

Fig. 4 zeigt eine Steuereinrichtung CONTR und eine Speichereinrichtung MEM.

In der Speichereinrichtung MEM ist ein Datensatz abgespeichert, der die Zugehörigkeit von Gerätenummern zu drei Geräte-Listen beschreibt. Dieser Datensatz besteht aus einer Menge von Strukturelementen, die, wie in dem Beispiel nach Fig. 3, mit Suchschlüsseln verkettet sind.

Die Steuereinrichtung CONTR weist eine Umwandlungseinrichtung GEN, einen Vergleicher COMP und eine Zugriffseinrichtung ACC auf.

Ein Signal LREQ liegt an der Umwandlungseinrichtung GEN an. Die Umwandlungseinrichtung GEN sendet an die Zugriffseinrichtung ACC Daten über einen Suchschlüssel KEY und an den Vergleicher COMP Daten über eine verkürzte Gerätenummer NUM. Die Zugriffseinrichtung ACC liest mit dem Suchschlüssel KEY Strukturelemente DAT aus der Speichereinrichtung MEM aus und sendet die Strukturelemente DAT an den Vergleicher COMP. Der Vergleicher COMP sendet ein Signal an die Zugriffseinrichtung ACC und ein Signal LANSW als Antwort auf das Signal LREQ.

Das Signal LREQ enthält Daten über eine Gerätenummer und fordert die Steuereinrichtung CONTR auf, diejenige der drei Geräte-Listen zu bestimmen, die der Gerätenummer zugeordnet ist.

Die Umwandlungseinrichtung GEN bildet die Gerätenummer im Signal LREQ auf einen Suchschlüssel KEY und eine verkürzte Gerätenummer NUM ab, die die Position der Gerätenummer in dem durch den Suchschlüssel KEY adressierten Gerätenummernbereich angibt. Die Zugriffseinrichtung ACC empfängt die Daten über den Suchschlüssel KEY und greift auf den durch ihn adressierten Speicherbereich der Speichereinrichtung MEM zu. Dort liest sie die dem Suchschlüssel KEY zugeordneten Strukturelemente DAT nacheinander aus und gibt sie an den Vergleicher COMP weiter. Der Vergleicher COMP überprüft mittels der verkürzten Gerätenummer NUM, ob die in dem Signal LREQ enthaltene Gerätenummer mit einer der durch die Strukturelemente DAT beschriebenen Gerätenummern übereinstimmen. Dies ist möglich, da alle Strukturelemente DAT dem durch KEY adressierten Gerätenummernbereich zugeordnet sind. Tritt dieser Fall ein, so benachrichtigt der Vergleicher COMP die Zugriffseinheit ACC, die dann das weitere Auslesen von Strukturelementen DAT aus der Speichereinrichtung MEM stopt. Anschließend sendet sie über das Signal LANSW Daten, die die gesuchte Geräte-Liste angeben.

Es ist auch möglich, daß an dem Vergleicher COMP anstatt Daten über die verkürzte Gerätenummer NUM Daten über den Suchschlüssel KEY und die Gerätenummer die in dem Signal LREQ enthalten ist, anliegen. Die den Strukturelementen DAT zugeordneten Gerätenummern würden dann mit Hilfe des Suchschlüssels KEY ermittelt und mit der Gerätenummer verglichen, die im Signal LREQ enthalten ist.

## Patentansprüche

1. Verfahren zur Bestimmung der Zuordnung eines Mobilfunkendgerätes (ME₁ bis MEₙ) zu Geräte-Listen (B, G, W), die jeweils eine Anzahl von Gerätenummern (MEI₁ bis MEIₙ) aufzählen, die Mobilfunkendgeräten eindeutig zugewiesen sind,
**dadurch gekennzeichnet,**
**daß** jeder Gerätenummer (MEI₁ bis MEIₙ) durch einen Algorithmus (ALG) ein Suchschlüssel (KEY₁ bis KEYₚ; KEY) derart zugeordnet wird, daß jeweils mehrere Gerätenummern (MEI₁ bis MEIₙ) mit einem Suchschlüssel (KEY₁ bis KEYₚ; KEY) korrespondieren, und daß von dem Suchschlüssel (KEY₁ bis KEYₚ; KEY) gleichzeitig eine Anzahl von unterschiedlichen Strukturelementen (S₁ bis S_{q}; DAT) erfaßt wird.

2. Verfahren nach Anspruch 1,
**dadurch gekennzeichnet,**
**daß** eine Sorte (KI) von Strukturelementen alle Gerätenummern (MEI₁ bis MEIₙ), die mit einem Suchschlüssel (KEY₁ bis KEYₚ; KEY) korrespondieren, einer Geräte-Liste (B, G, W) zuordnet.

3. Verfahren nach Anspruch 1,
**dadurch gekennzeichnet,**
**daß** eine Sorte (BI) von Strukturelementen (S₁ bis S_{q}; DAT) einen ganzen Block aufeinanderfolgender Gerätenummern (MEI₁ bis MEIₙ) einer Geräte-Liste (B, G, W) zuordnet.

4. Verfahren nach Anspruch 1,
**dadurch gekennzeichnet,**
**daß** eine Sorte (SI) von Strukturelementen (S₁ bis S_{q}; DAT) eine einzelne Gerätenummer (MEI₁ bis MEIₙ) einer Geräte-Liste (B, G, W) zuordnet.

5. Verfahren nach Anspruch 1,
**dadurch gekennzeichnet,**
**daß** gleichartige Strukturelemente (S₁ bis S_{q}; DAT), die von dem selben Suchschlüssel (KEY₁ bis KEYₚ; KEY) erfaßt werden, in Strukturen (L1, RNG, SL, LB) fester Länge zusammengefaßt werden.

6. Verfahren nach Anspruch 5,
**dadurch gekennzeichnet,**
**daß** bei Bedarf mehrere gleichartige Strukturen (L1, RNG, SL, LB) miteinander verkettet werden.

7. Verfahren nach Anspruch 1,
**dadurch gekennzeichnet,**
**daß** den Strukturelementen (S₁ bis S_{q}; DAT) ein Zeitstempel zugeordnet wird, der angibt, wann der durch ihn spezifizierte Datensatz zum letzten Mal erneuert wurde.

8. Vorrichtung zur Bestimmung der Zuordnung eines Mobilfunkendgerätes (ME₁ bis MEₙ) zu Geräte-Listen (B, G, W), die jeweils eine Anzahl von Gerätenummern (MEI₁ bis MEIₙ) aufzählen, die eindeutig Mobilfunkendgeräten (ME₁ bis MEₙ) zugewiesen sind,
mit einer Speichereinrichtung (MEM) und mit einer Steuereinrichtung (CONTR), die so ausgestaltet ist, daß sie auf Anforderung Daten über die Zuordnung eines Mobilfunkendgerätes (ME₁ bis MEₙ) zu einer Geräte-Liste (B, G, W) ermittelt,
**dadurch gekennzeichnet ,**
**daß** die Speichereinrichtung (MEM) als Speichereinrichtung für unterschiedliche Strukturelemente (S₁ bis S_{q}; DAT) ausgestaltet ist, und daß die Steuereinrichtung (CONTR) mit einer Umwandlungseinrichtung (GEN) zum Erzeugen eines Suchschlüssels (KEY₁ bis KEYₚ; KEY) aus einer Gerätenummer (MEI₁ bis MEIₙ), mit einem Vergleicher (COMP) zum Erfassen der Zugehörigkeit einer Gerätenummer (MEI₁ bis MEIₙ) zu einem Strukturelement (S₁ bis S_{q}; DAT), und mit einer Zugriffseinrichtung (ACC) zum Auslesen von unterschiedlichen Strukturelementen (S₁ bis S_{q}; DAT) aus der Speichereinrichtung (MEM) versehen ist, die so ausgestaltet ist, daß sie auf die Strukturelemente (S₁ bis S_{q}; DAT) mittels eines Suchschlüssels (KEY₁ bis KEYₚ; KEY) zugreift.

## Claims

1. Method for determining the assignment of a mobile station (ME₁ to MEₙ) to equipment lists (B, G, W) each containing a number of equipment numbers (MEI₁ to MEIₙ) that are uniquely assigned to mobile stations,
**characterized in that**
each equipment number (MEI₁ to MEIₙ) is assigned a search key (KEY₁ to KEYₚ; KEY) by an algorithm (ALG) in such a way that several equipment numbers (MEI₁ to MEIₙ) correspond in each case with a search key (KEY₁ to KEYₚ; KEY), and that the search key (KEY₁ to KEYₚ; KEY) at the same time covers a number of different structural elements (S₁ to S_{q}; DAT).

2. Method according to claim 1,
**characterized in that**
a sort (KI) of structural elements assigns all equipment numbers (MEI₁ to MEIₙ) that correspond with a search key (KEY₁ to KEYₚ; KEY) to an equipment list (B, G, W).

3. Method according to claim 1,
**characterized in that**
a sort (BI) of structural elements (S₁ to S_{q}; DAT) assigns an entire block of consecutive equipment numbers (MEI₁ to MEIₙ) to an equipment list (B, G, W).

4. Method according to claim 1,
**characterized in that**
a sort (SI) of structural elements (S₁ to S_{q}; DAT) assigns a single equipment number (MEI₁ to MEIₙ) to an equipment list (B, G, W).

5. Method according to claim 1,
**characterized in that**
like structural elements (S₁ to S_{q}; DAT) covered by the same search key (KEY₁ to KEYₚ; KEY) are combined in structures (L1, RNG, SL, LB) of a fixed length.

6. Method according to claim 5,
**characterized in that**
if required, several like structures (L1, RNG, SL, LB) are linked with one another.

7. Method according to claim 1,
**characterized in that**
the structural elements (S₁ to S_{q}; DAT) are assigned a time stamp indicating when the data record specified by it was last renewed.

8. Apparatus for determining the assignment of a mobile station (ME₁ to MEₙ) to equipment lists (B, G, W) each containing a number of equipment numbers (MEI₁ to MEIₙ) that are uniquely assigned to mobile stations (ME₁ to MEₙ),
with a memory device (MEM) and a controller (CONTR) that is designed to determine, on request, data about the assignment of a mobile station (ME₁ to MEₙ) to an equipment list (B, G, W),
**characterized in that**
the memory device (MEM) is designed as a memory device for different structural elements (S₁ to S_{q}; DAT), and that the controller (CONTR) is provided with a converting device (GEN) for generating a search key (KEY₁ to KEYₚ; KEY) from an equipment number (MEI₁ to MEIₙ), with a comparator (COMP) for determining the affiliation of an equipment number (MEI₁ to MEIₙ) to a structural element (S₁ to S_{q}; DAT), and with an access device (ACC) for reading different structural elements (S₁ to S_{q}; DAT) from the memory device (MEM), which access device is designed so that it accesses the structural elements (S₁ to S_{q}; DAT) by means of a search key (KEY₁ to KEYₚ; KEY).

## Revendications

1. Procédé pour déterminer l'affectation d'un terminal radiotéléphonique mobile (ME₁ à MEₙ) à des listes d'appareils (B, G, W), qui énumèrent respectivement un certain nombre de numéros d'appareil (MEI₁ à MEIₙ), qui sont attribués de façon univoque à des terminaux radiotéléphoniques mobiles, **caractérisé en ce qu'**à chaque numéro d'appareil (MEI₁ à MEIₙ), une clé de recherche (KEY₁ à KEYₚ; KEY) est affectée par un algorithme (ALG) de telle sorte que respectivement plusieurs numéros d'appareil (MEI₁ à MEIₙ) correspondent à une clé de recherche (KEY₁ à KEYₚ; KEY) et en ce que la clé de recherche (KEY₁ à KEYₚ; KEY) comprend simultanément un certain nombre d'éléments structurels différents (S₁ à S_{q}; DAT).

2. Procédé selon la revendication 1, **caractérisé en ce qu'**un type (KI) d'éléments structurels affecte tous les numéros d'appareil (MEI₁ à MEIₙ), qui correspondent à une clé de recherche (KEY₁ à KEYₚ; KEY) à une liste d'appareils (B, G, W).

3. Procédé selon la revendication 1, **caractérisé en ce qu'**un type (BI) d'éléments structurels (S₁ à S_{q}; DAT) affecte un bloc entier de numéros d'appareil (MEI₁ à MEIₙ) consécutifs à une liste d'appareils (B, G, W).

4. Procédé selon la revendication 1, **caractérisé en ce qu'**un type (SI) d'éléments structurels (S₁ à S_{q}; DAT) affecte un numéro d'appareil (MEI₁ à MEIₙ) individuel à une liste d'appareils (B, G, W).

5. Procédé selon la revendication 1, **caractérisé en ce que** des éléments structurels (S₁ à S_{q}; DAT) de même type, qui sont compris par la même clé de recherche (KEY₁ à KEYₚ; KEY), sont regroupés dans des structures (L1, RNG, SL, LB) de longueur fixe.

6. Procédé selon la revendication 5, **caractérisé en ce que** plusieurs structures (L1, RNG, SL, LB) de même type sont chaînées ensemble, si nécessaire.

7. Procédé selon la revendication 1, **caractérisé en ce qu'**un horodatage est affecté aux éléments structurels (S₁ à S_{q}; DAT) qui indique à quelle heure l'enregistrement qu'il spécifie a été renouvelé pour la dernière fois.

8. Dispositif pour déterminer l'affectation d'un terminal radiotéléphonique mobile (ME₁ à MEₙ) à des listes d'appareils (B, G, W), qui énumèrent respectivement un certain nombre de numéros d'appareil (MEI₁ à MEIₙ), qui sont attribués de façon univoque à des terminaux radiotéléphoniques mobiles (ME₁ à MEₙ), avec un dispositif de mémoire (MEM) et un dispositif de commande (CONTR) qui est réalisé de telle sorte qu'il détermine sur demande des données concernant l'affectation d'un terminal radiotéléphonique mobile (ME₁ à MEₙ) à une liste d'appareils (B, G, W), **caractérisé en ce que** le dispositif de mémoire (MEM) est réalisé comme un dispositif de mémoire pour des éléments structurels (S₁ à S_{q}; DAT) différents, et en ce que le dispositif de commande (CONTR) présente un dispositif de conversion (GEN) pour générer une clé de recherche (KEY₁ à KEYₚ; KEY) à partir d'un numéro d'appareil (MEI₁ à MEIₙ), un comparateur (COMP) pour détecter l'appartenance d'un numéro d'appareil (MEI₁ à MEIₙ) à un élément structurel (S₁ à S_{q}; DAT), et un dispositif d'accès (ACC) pour extraire des éléments structurels (S₁ à S_{q}; DAT) différents du dispositif de mémoire (MEM) qui est réalisé de telle sorte qu'il accède aux éléments structurels (S₁ à S_{q}; DAT) au moyen d'une clé de recherche (KEY₁ à KEYₚ; KEY).
